# EUROPÄISCHE PATENTSCHRIFT

(11) **EP 1 138 559 B1**
(45) Veröffentlichungstag und Bekanntmachung des Hinweises auf die Patenterteilung: **24.12.2008**
(21) Anmeldenummer: 01106410.2
(22) Anmeldetag: 21.03.2001
(51) Int. Cl.: B60R 21/34, B60R 19/48

(54) **Verwendung eines Auslöseschalters für ein Personenschutzsystem**
Use of a switch for a protection system of persons
Utilisation d'un interrupteur pour un système de protection de personnes

(30) Priorität: 31.03.2000 DE 10016142
(43) Veröffentlichungstag der Anmeldung: 04.10.2001
(73) Patentinhaber: Volkswagen Aktiengesellschaft, 38436 Wolfsburg (DE)
(72) Erfinder: Schwant, Wilfried, 38536 Meinersen (DE)
(74) Vertreter: Liebl, Thomas

(56) Entgegenhaltungen:
- EP-A- 0 914 992
- FR-A- 2 671 316
- GB-A- 296 977
- GB-A- 2 102 999
- US-A- 5 072 080

## Beschreibung

Die Erfindung betrifft die Verwendung eines Auslöseschalters für ein Personenschutzsystem.

Aus der Praxis sind verschiedene Personenschutzsysteme für Kraftfahrzeuge bekannt. Bei diesen Personenschutzsystemen handelt es sich einerseits um Fußgängerschutzsysteme und andererseits um Insassenschutzsysteme. Beide dienen dazu, den Straßenverkehr sicherer zu machen.

DE 28 14 107 A1 beschreibt ein Fußgängerschutzsystem, bei dem die Motorhaube eines mit einem Fußgänger zusammenprallenden Fahrzeugs angehoben wird. Das Anheben der Motorhaube erfolgt durch Entfaltung einer Gassackvorrichtung, welche durch einen Sensor ausgelöst wird. Der Sensor ist im Bereich der vorderen Stoßstange des Kraftfahrzeuges angeordnet.

US 4 249 632 A1 entspricht inhaltlich der zuvor genannten Druckschrift DE 28 14 107 A1.

EP 0 630 801 B1 und EP 0 641 707 B1 beschreiben Fußgängerschutzsysteme, bei denen wie bei den zuvor genannten Fußgängerschutzsystemen die Motorhaube eines Pkw infolge eines Zusammenpralles mit einem Fußgänger angehoben wird. Im Gegensatz zu den zuvor genannten Schriften wird jedoch bei EP 0 630 801 B1 und EP 0 641 707 B1 auf aktive Elemente, die die Motorhaube anheben und auf Sensoren, die die aktiven Elemente auslösen, verzichtet. Das Anheben der Motorhaube erfolgt nach den zuletzt genannten Schriften ausschließlich als Reaktion auf den Aufprall eines Fußgängers auf die Vorderkante der Motorhaube, wobei Mechaniken vorgesehen sind, die die Aufprallenergie für eine Hubbewegung der Motorhaube nutzen.

US 4 093 290 A1 beschreibt ein Fußgängerschutzsystem, mit dem verhindert werden soll, dass ein auf einer Motorhaube infolge einer Kollision liegender Fußgänger von der Motorhaube herabfällt. Dazu ist ein Rahmenelement vorgesehen, welches aufgrund einer Sensorbetätigung ausgefahren wird.

Insassenschutzsysteme, z. B. Airbagsysteme und Gurtstraffer, sind aus der Praxis bekannt. Wesentlich für deren Funktion ist die frühzeitige und korrekte Ermittlung eines Aufpralls, so dass die genannten Insassenschutzvorrichtungen zuverlässig ausgelöst werden, wenn ihr Einsatz tatsächlich erforderlich ist. Daher ist der Entwicklung von Sensoren für diese Insassenschutzvorrichtungen besondere Aufmerksamkeit gewidmet worden.

WO 98/29888 beschreibt einen elektromechanischen Beschleunigungssensor, welcher dazu bestimmt ist, bei einem Seitenaufprall auf einen Pkw diesen Aufprall festzustellen und gegebenenfalls einen Seitenairbag auszulösen.

Aus US 5 441 301 A1 ist ein weiterer Sensortyp für Airbagsysteme bekannt. Dieser Sensortyp weist zwei elektrische Kontaktelemente auf, welche ein Signal erzeugen, wenn sie einander berühren. Eines der Kontaktelemente ist als Rohr ausgebildet, welches das zweite als Stange oder Draht ausgebildete Kontaktelement ummantelt. Bei einem im Querschnitt kreisförmigen Rohr sind die beiden Kontaktelemente vorzugsweise konzentrisch angeordnet. Wird infolge einer Kollision das das innere Kontaktelement als äußeres Kontaktelement umhüllende Rohr gequetscht und kommt es dabei zu einem Kontakt, wird dadurch ein Signal erzeugt, welches eine Airbagvorrichtung oder einen Gurtstraffer auslöst.

Neben den genannten Sensoren für Airbagvorrichtungen sind aus DE 38 44 241 A1 und US 5 847 643 A1 Sensoren für Alarmanlagen und Warnvorrichtungen bekannt. Die Sensoren weisen jeweils zwei Kontaktstreifen auf, welche ganz beziehungsweise teilweise von einer Kunststoff- oder Gummiumhüllung umschlossen sind.

Die CH 677 546 A5 beschreibt einen Kontaktschlauch als Bestandteil einer Verkehrsüberwachungs- und/oder Zählvorrichtung, bei der der Kontaktschlauch vermeintlich zwei Funktionen auslösen soll. Einzelheiten, wie dies durchführbar sein soll, sind jedoch nicht offenbart.

Aus der gattungsbildenden US 5,072,080 ist bereits ein Auslöseschalter mit zwei Kontaktpaaren bekannt, welche druckbetätigt Kontaktsignale erzeugen und in einem räumlichen Abstand voneinander angeordnet sind. Konkret ist hier ein Sicherheitskontaktschalter vorgesehen, der ein elastisches Hohlprofil aufweist, welches im Inneren zumindest zwei leistenartige, elektrisch leitende Vorsprünge und zumindest eine entlang des Hohlprofils geführte, ebenfalls elektrisch leitende Gegenfläche aufweist, deren gegenseitige Berührung bei einer Quetschung des Hohlprofils Schaltimpulse auslöst. Mit einem derartigen Schalter soll eine zuverlässige Kontaktgabe und damit Impulsauslösung zur Verfügung gestellt werden. Ein derartiges Hohlprofil kann unter anderem auch als Schutz- bzw. Sicherheitsprofil an Kraftfahrzeugen benutzt werden. Weitere Ausführungen sind hierzu nicht gemacht.

Die EP 0 914 992 A1 betrifft ein Fußgängerschutzsystem, bei welchem einem mit einem Pkw kollidierenden Fußgänger, schwere Verletzungen dadurch erspart werden sollen, dass die Motorhaube des mit dem Fußgänger kollidierenden Pkws angehoben wird. Dazu ist gemäß der genannten Schrift in einem Pkw in dessen vorderer Stoßstange ein Kollisionssensor vorgesehen, welcher einen Zusammenprall eines Fußgängers mit dem Pkw detektiert. Aufgrund des detektierten Zusammenpralls wird eine Geschwindigkeitsbestimmung gestartet, bei welcher die Umfangsgeschwindigkeit der Räder und an dem Fahrzeug nachweisbare Beschleunigungen ausgewertet werden. Wenn die momentane Geschwindigkeit im Zeitpunkt des Aufpralls im Bereich 20 bis 60 km/h liegt, wird ein Zündsignal abgegeben und ein Betätigungsorgan hebt daraufhin die Motorhaube an, so dass diese unter einem aufprallenden Fußgänger einfedern kann. Das in EP 0 914 992 A1 beschriebene Personenschutzsystem ist von der Theorie her sehr fortschrittlich, erfordert jedoch aufwendige Sensoren und eine aufwendige Auswertelogik, so dass es sehr teuer ist und auch Fehlfunktionen wegen der Komplexität nicht mit der erforderlichen Sicherheit ausgeschlossen werden können.

Aufgabe der vorliegenden Erfindung ist es, eine vorteilhafte Verwendung eines Auslöseschalters mit den Merkmalen des Oberbegriffs des Patentanspruchs 1 zur Verfügung zu stellen, mittels dem in Verbindung mit einem Personenschutzsystem eines Kraftfahrzeugs, das eine anhebbare Motorhaube aufweist, ein Sicherheitssystem zur Verfügung gestellt wird, mittels dem zum einen Kollisionssituationen zuverlässig und funktionssicher erkannt werden können und zum anderen die jeweils geeigneten Personenschutzsysteme in der gewünschten Weise situationsabhängig aktiviert werden können.

Diese Aufgabe wird gelöst mit den Merkmalen des Anspruchs 1.

Gemäß Patentanspruch 1 ist vorgesehen, in einem ersten Schritt die Geschwindigkeit eines Kraftfahrzeuges als Relativgeschwindigkeit zu einem Kollisionsobjekt durch den Auslöseschalter zu ermitteln, wobei anschließend eine Überprüfung durchgeführt wird, ob die ermittelte Geschwindigkeit in einem vorgegebenen Bereich liegt. Eine Auslösung des Personenschutzsystems erfolgt dann nur, wenn die Geschwindigkeit in dem vorgegebenen Bereich liegt. Liegt die Geschwindigkeit dagegen oberhalb des vorgegebenen Bereichs, erfolgt eine Verriegelung der Motorhaube.

Mit einer derartigen Ausgestaltung der Erfindung kann die Geschwindigkeit des Kraftfahrzeuges präzise bestimmt werden und damit gleichzeitig ein Verriegelungssystem zur Verfügung gestellt werden, mit dem verhindert wird, dass bei Kollisionen mit hoher Geschwindigkeit die Fahrzeugfrontpartie durch Anheben der Motorhaube in unerwünschter Weise ihre Steifigkeit verliert und somit für die Fahrzeuginsassen ein größeres Verletzungsrisiko entsteht.

Bei einer solchen Ausgestaltung lassen sich die von dem Auslöseschalter erzeugten Signale besonders gut in eine zusätzliche Sicherheit für Fußgänger umsetzen, da es die Messstrecke erlaubt, die Geschwindigkeit des Kraftfahrzeuges präzise zu bestimmen und damit die Voraussetzungen für ein präzises Anheben der Motorhaube geschaffen sind. Dies gilt insbesondere, wenn eine Motorhaube Verwendung findet, die mit einem Hubantrieb versehen ist, welcher lediglich innerhalb eines bestimmten Geschwindigkeitsfensters betätigbar ist. Das Verriegelungssystem, welches oberhalb einer für das Verstellen der Motorhaube festgelegten Höchstgeschwindigkeit diese verriegelt, schafft zusätzliche Sicherheit da, wie schon vorher ausgeführt, auf diese Weise verhindert wird, dass bei Kollisionen mit hoher Geschwindigkeit die Fahrzeugfrontpartie durch Anheben der Motorhaube in unerwünschter Weise Ihre Steifigkeit verliert und somit für die Fahrzeuginsassen ein größeres Verletzungsrisiko entsteht.

Vorzugsweise weisen das erste und das zweite Kontaktpaar Kontaktelemente auf, die an einer gemeinsamen Baugruppe angeordnet sind. Dabei wird durch den Abstand der Kontaktelemente des zweiten Kontaktpaares eine Messstrecke definiert, so dass ein Durchlaufen dieser Messstrecke durch ein Kontaktelement im Verlaufe eines Aufpralles eine Geschwindigkeitsermittlung ermöglicht. Aufgrund der Geschwindigkeitsermittlung ist es möglich, das Personenschutzsystem nur in einem vorher definierten Geschwindigkeitsfenster auslösen zu lassen, so dass wirkungslose oder gar gefährliche Auslösungen des Personenschutzsystems verhindert werden können.

Vorzugsweise weisen das erste und das zweite Kontaktpaar ein gemeinsames Kontaktelement auf. Dadurch wird nicht nur eine einfache, mit geringem Aufwand herstellbare Konstruktion erreicht, sondern es wird ferner erreicht, dass bauartbedingt das Betätigen des ersten Kontaktpaares im Falle einer durch Quetschen oder Drücken ausgelösten Betätigung des Auslöseschalters der Beginn des Schließens des zweiten Kontaktpaares ist.

Eine besonders einfache Konstruktion, die sich mit geringem Aufwand herstellen lässt, ergibt sich, wenn eine Gehäusewand des Auslöseschalters als Kontaktelement des ersten Kontaktpaares ausgebildet ist. Vorzugsweise wird dafür die Gehäusewand aus einem elektrisch leitfähigem Kunststoff oder Gummi gefertigt.

Vorzugsweise ist die gemeinsame Baugruppe, welche Kontaktelemente des ersten und zweiten Kontaktpaares trägt, als Kernrohr im Innern der Gehäusewand ausgebildet. Die Ausgestaltung als Kemrohr gibt dem Auslöseschalter insgesamt als Struktur eine ausreichende Festigkeit und erlaubt gleichzeitig eine kostengünstige Herstellung bei einer hohen Präzision hinsichtlich der Länge der Messstrecke. Das Kemrohr kann dabei ein-oder mehrteilig ausgebildet sein und verschiedene Querschnitte aufweisen. Vorzugsweise ist das Kernrohr jedoch im Querschnitt im wesentlichen rechteckig und aus zwei Schalen zusammengesteckt.

Wenn der Auslöseschalter als Stoßfänger ausgestaltet ist, wird nicht nur erreicht, dass im Falle einer Kollision das Personenschutzsystem sicher angesprochen wird, sondern es werden auch in erheblichem Umfang Bauelemente und damit Kosten eingespart.

Der für ein Personenschutzsystem vorgesehene Auslöseschalter eignet sich in gleicher Weise für Fußgängerschutzsysteme und Insassenschutzsysteme. Vorzugsweise werden mit dem Auslöseschalter jedoch gleichzeitig ein Fußgängerschutzsystern und ein Insassenschutzsystem aktiviert. Auf diese Weise lässt sich der Aufwand für die Sensorik und Verkabelung an einem Personenschutzsysteme aufweisenden Kraftfahrzeug erheblich verringern.

Wesentlich für die Erfindung ist der Erfindungsgedanke, für ein Personenschutzsystem in einem Bauelement zwei Schalter zu vereinen und die mit diesen Schaltern auslösbaren Signale zu verwenden, um Elemente des Personenschutzsystems zu aktivieren oder zu sichern.

Weitere vorteilhafte Ausgestaltungen und Weiterbildungen der Erfindungen ergeben sich aus den Unteransprüchen, sowie aus der Beschreibung im Zusammenhang mit den Zeichnungen.

Es zeigen:
- Fig. 1: einen Pkw mit einem erfindungsgemäßen Personenschutzsystem gemäß einer bevorzugten Ausführungsform,
- Fig. 2: einen Abschnitt eines erfindungsgemäßen Stoßfängers, gemäß einer ersten Ausführungsform welcher als Auslöseschalter für das Personen-schutzsystem in dem Pkw gemäß der Figur 1 Verwendung findet,
- Fig. 3: ein Schnitt durch den Stoßfänger gemäß der ersten Ausführungsform in Figur 2 gemäß der Linie III-III in Figur 2, und
- Fig. 4: einen dem Schnitt in Figur 3 entsprechenden Schnitt durch einen Stoßfänger gemäß einer zweiten Ausführungsform.

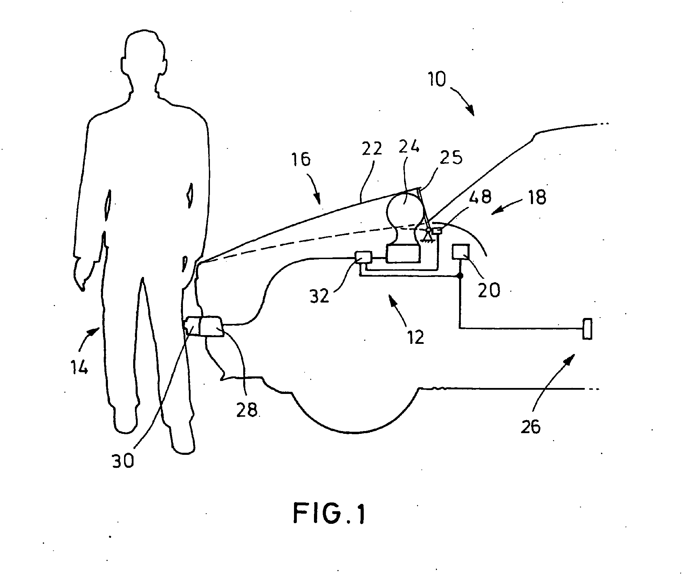

Der in Figur 1 schematisch dargestellte Pkw 10 ist mit einem Personenschutzsystem 12 ausgestattet, welches zum Schutz von Fußgängern 14 ein Fußgängerschutzsystem 16 und zum Schutz der Insassen ein Insassenschutzsystem 18 mit einer Airgabvorrichtung 20 aufweist.

Das Fußgängerschutzsystem 16 weist eine anhebbare Motorhaube 22 auf, welche mittels einer Motorhauben-Airbagvorrichtung 24 anhebbar ist. Um zu verhindern, dass aufgrund einer Zündung der Motorhauben- Airbagvorrichtung 24 die Motorhaube 22 mehr als einen vorbestimmten Weg angehoben wird, ist eine Motorhaubenfangvorrichtung 25 in Form eines Seilzuges, einer Kette oder eines Anschlages vorgesehen. Es sei darauf hingewiesen, dass der Begriff Motorhaube in Zusammenhang mit der vorliegenden Anmeldung die Abdeckung eins vor der Fahrgastzelle eines Pkw liegenden Raumes beschreibt, wobei es für die Erfindung unerheblich ist, ob dieser Raum für den Einbau eines Motors Verwendung findet.

Das Insassenschutzsystem 18 weist neben der Airbagvorrichtung 20, die einen Fahrer-und einen Beifahrerairbag umfasst, einen Gurtstraffer 26 auf. Die Airbagvorrichtung 20, die Motorhauben-Airbagvorrichtung 24 und der Gurtstraffer 26 werden mit pyrotechnisehen Ladungen betrieben. Zur Zündung dieser pyrotechnischen Ladungen ist ein als vorderer Stoßfänger 28 ausgebildeter Auslöseschalter 30 vorgesehen, welcher über eine Steuerung 32 die pyrotechnischen Ladungen auslöst.

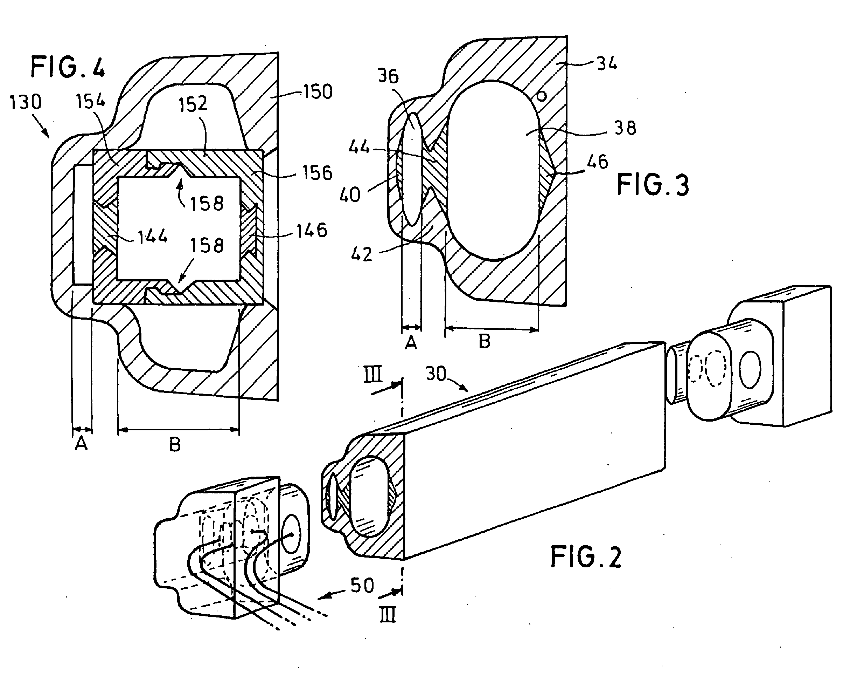

Der Auslöseschalter 30, der in den Figuren 2 und 3 in einer ersten Ausführungsform im Detail gezeigt ist, besteht im wesentlichen aus einem aus zwei Werkstoffen extrudierten Doppelkammerprofil 34. Das Doppelkammerprofil 34 umfast eine erste Kammer 36 und eine zweite Kammer 38, welche eine erste und eine zweite Verformungszone definieren. Die erste Kammer 36 weist an ihrer in Fahrtrichtung vorne gelegenen Vorderseite einen ersten Leiterstreifen 40 auf, welcher als Kontaktelement mit einem in der Trennwand 42 zwischen den Kammern 36, 38 als Kontaktelement ausgebildeten zweiten Leiterstreifen 44 ein erstes Kontaktpaar bildet. Der zweite Leiterstreifen 44 bildet darüber hinaus mit einem an der Rückseite des Doppelkammerprofils 34 als Kontaktelement ausgebildeten dritten Leiterstreifen 46 ein zweites Kontaktpaar. Die Leiterstreifen 40, 44, 46 bestehen aus elektrisch leitfähigem Gummi, wohingegen die verbleibenden Wandabschnitte des Doppelkammerprofils 34 aus nicht leitfähigem Gummi bestehen.

Die erste Kammer 36, welche eine Weite A von 2 mm aufweist, ist hinsichtlich ihrer Wandstärken so dimensioniert, dass sie sehr weich ist und ein Kontakt zwischen dem ersten und dem zweiten Leiterstreifen 40, 44 sehr schnell zustande kommt. Dagegen ist die Wanddimensionierung der zweiten Kammer 38 bei einem Abstand B des zweiten und des dritten Leiterstreifens 44, 46 von 10 mm, so dass die zweite Kammer 38 gewählt eine steifere Verformungszone darstellt, als die erste Kammer 36.

Der in Figur 4 im Schnitt gezeigte Stoßfänger gemäß der zweiten Ausführungsform unterscheidet sich von dem in Figur 3f gezeigten Stoßfänger durch einen mehrteiligen Aufbau, wobei die Funktionsweisen übereinstimmen. Für den als Stoßfänger ausgebildeten Auslöseschalter 130 gemäß der zweiten Ausführungsform werden daher Bezugszeichen verwendet, die gegenüber entsprechenden Bezugszeichen gemäß der ersten Ausführungsform um 100 erhöht sind.

Der Auslöseschalter 130 gemäß der zweiten Ausführungsform, weist eine aus elektrisch leitfähigem Gummi gefertigte Gehäusewand 150 auf, welche ein im Querschnitt rechteckiges Kernrohr 152 umschließt. Das Kernrohr 152 ist längsgeteilt und umfasst eine erste und eine zweite Rohrschale 154, 156 welche zusammengesteckt sind und Einknickkerben 158 definieren.

In der ersten Rohrschale 154 ist in Rohrlängserstreckung ein Kontaktelement 144 ausgebildet, welches zusammen mit der Gehäusewand 150 ein erstes Kontaktpaar bildet. Der Abstand A zwischen der Gehäusewand 150 und dem Kontaktelement 144, welcher einen Schaltweg definiert, beträgt 2 mm.

Neben der ersten Rohrschale 154 weist auch die zweite Rohrschale 156 ein Kontaktelement 146 auf, wobei dieses Kontaktelement 146 nachfolgend als rückwärtiges Kontaktelement 146 bezeichnet werden wird. Das rückwärtige Kontaktelement 146 bildet zusammen mit dem Kontaktelement 144 ein zweites Kontaktpaar, dessen Kontaktelemente einen Abstand B von 10 mm aufweisen.

Die Kontaktelemente, die elektrisch leitfähig ausgebildet sind, sind wie die entsprechenden Leiterstreifen 40, 44, 46 über Anschlussleitungen 50 mit der Steuerung 32 verbunden.

Die Gehäusewand 150 und die Rohrschalen 154, 156 sind derart ausgebildet, dass ein Verbinden der genannten Bauteile durch ineinander Einklipsen erfolgen kann.

Die beschriebenen Auslöseschalter 30, 130 lösen wie oben erwähnt die pyrotechnischen Ladungen der Airbagvorrichtung 20, der Motorhauben-Airbagvorrichtung 24 und des Gurtstraffers 26 aus. Dabei wirken die Auslöseschalter 3, 130 als Messwegschalter, deren jeweils erstes Kontaktpaar früher schaltet als das zweite Kontaktpaar. Um dies zu gewährleisten ist die Gehäusewand 34 weicher ausgebildet als das Kernrohr 36 oder die dem Kernrohr entsprechende zweite Verformungszone bei dem Auslöseschalter 30 gemäß der ersten Ausführungsform.

Durch einen Aufprall, insbesondere den eines Fußgängers 14 wird zunächst das erste Kontaktpaar geschlossen, wobei das dadurch erzeugte Signal ein Messzeitfensten öffnet. In Abhängigkeit von der Relativgeschwindigkeit des aufprallenden Fußgängers oder eines anderen Kollisionsobjektes relativ zum Auslöseschalter 30, 130 kann unter Berücksichtigung des Abstandes der Kontaktelemente 44, 46; 144, 146 des zweiten Kontaktpaares durch die Steuerung 32 die Fahrzeuggeschwindigkeit ermittelt werden.

Liegt die Fahrzeuggeschwindigkeit in einem vorgegebenen Geschwindigkeitsfenster, werden sämtliche pyrotechnischen Ladungen ausgelöst. Liegt die Geschwindigkeit oberhalb des Geschwindigkeitsfensters, erfolgt durch die Steuerung 32 eine Verriegelung der Motorhaube 22 mittels einer Verriegelungsvorrichtung 48, welche z. B. die Fangvorrichtung 25 festsetzt. Eine Aktivierung der pyrotechnischen Ladung der Motorhauben-Airbagvorrichtung 24 erfolgt nicht. Die pyrotechnischen Ladungen der Airbagvorrichtung 20 und des Gurtstraffers 26 werden dagegen ausgelöst. Auf diese Weise behält der vordere Abschnitt des Pkw eine größere Steifigkeit und des wird verhindert, dass eine Verformung der Frontpartie die Motorhaube 22 in oder durch die Frontscheibe drückt.

## Patentansprüche

1. Verwendung eines Auslöseschalters (30; 130) für ein Personenschutzsystem (12) eines Kraftfahrzeugs (10) mit anhebbarer Motorhaube (22), der mindestens ein erstes Kontaktpaar (40, 44; 150, 144), welches druckbetätigt einen ersten Stromkreis schließt und **dadurch** ein Kontaktsignal erzeugt, und mindestens ein zweites Kontaktpaar (44, 46; 144, 146) aufweist, welches druckbetätigt einen zweiten Stromkreis schließt und **dadurch** ein zweites Kontaktsignal erzeugt, wobei das erste und das zweite Kontaktpaar (40, 44, 46; 150, 144, 146) in einem in Fahrtrichung des Kraftfahrzeuges gesehen räumlichen Abstand voneinander angeordnet sind, und wobei das erste und das zweite Kontaktpaar (40, 44, 46; 150, 144, 146) Kontaktelemente aufweisen, die an einer gemeinsamen Baugruppe angeordnet sind, wobei der Abstand (B) der Kontaktelemente des zweiten Kontaktpaares (44, 46; 144, 146) eine Messstrecke definiert,
**dadurch gekennzeichnet, dass**
a) die Geschwindigkeit eines Kraftfahrzeuges als Relativgeschwindigkeit zu einem Kollisionsobjekt (14) durch den Auslöseschalter (30; 130) ermittelt wird,
b) eine Überprüfung durchgeführt wird, ob die ermittelte Geschwindigkeit in einem vorgegebenen Bereich liegt,
c) eine Auslösung des Personenschutzsystems nur erfolgt, wenn die Geschwindigkeit in dem vorgegebenen Bereich liegt, und
d) eine Verriegelung der Motorhaube (22) erfolgt, wenn die Geschwindigkeit oberhalb des vorgegebenen Bereichs liegt.

2. Verwendung nach Anspruch 1, **dadurch gekennzeichnet, dass** die Relativgeschwindigkeit indirekt durch Auswertung des Aufpralls des Kollisionsobjektes anhand des Auslöseschalters (30; 130) ermittelt wird.

3. Verwendung nach Anspruch 1 oder 2, **dadurch gekennzeichnet, dass** das erste und das zweite Kontaktpaar (40, 44, 46; 150, 144, 146) des Auslöseschalters (30; 130) ein gemeinsames Kontaktelement (44; 144) aufweisen.

4. Verwendung nach einem der Ansprüche 1 bis 3, **dadurch gekennzeichnet, dass** ein Kontaktelement (40; 150)des ersten Kontaktpaares (40, 44; 150, 144) als Gehäusewand (150) des Auslöseschalters ausgebildet sind.

5. Verwendung nach Anspruch 4**, dadurch gekennzeichnet, dass** die gemeinsame Baugruppe als Kemrohr (152) im Inneren der Gehäusewand (150) ausgebildet ist.

6. Verwendung nach Anspruch 5, **dadurch gekennzeichnet, dass** eine Betätigung des ersten Kontaktpaares (150, 144) durch Quetschung der Gehäusewand (150) in Richtung auf das Kernrohr (152) erfolgt.

7. Verwendung nach Anspruch 5 oder 6, **dadurch gekennzeichnet, dass** die Steifigkeiten der Gehäusewand (150) und des Kernrohres (152) derart aufeinander abgestimmt sind, dass ein Beginn der Betätigung des zweiten Kontaktpaares (144, 146) erst erfolgt, wenn das erste Kontaktpaar (150, 144) geschlossen ist.

8. Verwendung nach einem der Ansprüche 1 bis 7, **dadurch gekennzeichnet, dass** der Auslöseschalter (30; 130) als Stoßfänger (28) ausgestaltet ist.

9. Verwendung nach einem der Ansprüche 1 bis 8, **dadurch gekennzeichnet, dass** durch den Auslöseschalter (30; 130) ein Fußgängerschutzsystem und/oder ein Insassenschutzsystem aktiviert wird.

10. Verwendung nach Anspruch 9, **dadurch gekennzeichnet, dass** das Insassenschutzsystem (18) eine Airbagvorrichtung (20) und/oder einen Gurtstraffer (26) aufweist.

11. Verwendung nach einem der Ansprüche 9 oder 10, **dadurch gekennzeichnet, dass** die Motorhaube (22) mit einem Hubantrieb (24, 25) versehen ist, welcher lediglich innerhalb eines Geschwindigkeitsfensters betätigbar ist, und welcher ein Verriegelungssystem (48) aufweist, welches oberhalb einer vorgegebenen Verriegelungsgeschwindigkeit die Motorhaube (22) in ihrer geschlossenen Position verriegelt.

## Claims

1. Use of a trigger switch (30; 130) for a personal protection system (12) of a motor vehicle (10) with a liftable engine bonnet (22), which trigger switch (30; 130) has at least a first pair of contacts (40, 44; 150, 144) which closes a first circuit under pressure activation and as a result generates a contact signal, and has at least a second pair of contacts (44, 46; 144, 146) which closes a second circuit under pressure activation and as a result generates a second contact signal, wherein the first and second pairs of contacts (40, 44, 46; 150, 144, 146) are arranged at a spatial distance from one another viewed in the direction of travel of the motor vehicle, and wherein the first and second pairs of contacts (40, 44, 46; 150, 144, 146) have contact elements which are arranged on a common assembly, wherein the distance (B) between the contact elements of the second pair of contacts (44, 46; 144, 146) defines a measured section,
**characterized in that**
a) the speed of a motor vehicle is determined by the trigger switch (30; 130) as a relative speed with respect to a collision object (14),
b) checking is carried out to determine whether the determined speed is in a predefined range,
c) the personal protection system is triggered only if the speed is in the predefined range, and
d) the engine bonnet (22) is locked if the speed is above the predefined range.

2. Use according to Claim 1, **characterized in that** the relative speed is determined indirectly by evaluating the impact of the collision object using the trigger switch (30; 130).

3. Use according to Claim 1 or 2, **characterized in that** the first and second pairs of contacts (40, 44, 46; 150, 144, 146) of the trigger switch (30; 130) have a common contact element (44; 144).

4. Use according to one of Claims 1 to 3, **characterized in that** a contact element (40; 150) of the first contact pair (40, 44; 150, 144) is embodied as a housing wall (150) of the trigger switch.

5. Use according to Claim 4, **characterized in that** the common assembly is embodied as a core pipe (152) in the interior of the housing wall (150).

6. Use according to Claim 5, **characterized in that** the first pair of contacts (150, 144) is activated by squeezing the housing wall (150) in the direction of the core pipe (152).

7. Use according to Claim 5 or 6, **characterized in that** the degrees of rigidity of the housing wall (150) and of the core pipe (152) are matched to one another in such a way that activation of the second pair of contacts (144, 146) does not start until the first pair of contacts (150, 144) is closed.

8. Use according to one of Claims 1 to 7, **characterized in that** the trigger switch (30; 130) is configured as a bumper (28).

9. Use according to one of Claims 1 to 8, **characterized in that** a pedestrian protection system and/or a vehicle occupant protection system are activated by the trigger switch (30; 130).

10. Use according to Claim 9, **characterized in that** the vehicle occupant protection system (18) has an airbag device (20) and/or a seat belt pretensioner (26).

11. Use according to one of Claims 9 or 10, **characterized in that** the engine bonnet (22) is provided with a lifting drive (24, 25) which can be activated only within a speed window and which has a locking system (48) which, above a predefined locking speed, locks the engine bonnet (22) in its closed position.

## Revendications

1. Utilisation d'un commutateur à déclenchement (30 ; 130) pour un système de protection des personnes (12) d'un véhicule automobile (10) muni d'un capot moteur (22) relevable qui présente au moins une première paire de contacts (40, 44 ; 150, 144) qui, lorsqu'elle est actionnée par une pression, ferme un premier circuit électrique et génère ainsi un signal de contact, et au moins une deuxième paire de contacts (44, 46 ; 144, 146) qui, lorsqu'elle est actionnée par une pression, ferme un deuxième circuit électrique et génère ainsi un deuxième signal de contact, la première et la deuxième paire de contacts (40, 44, 46 ; 150, 144, 146), vues dans le sens de déplacement du véhicule automobile, étant espacées l'une de l'autre et la première et la deuxième paire de contacts (40, 44, 46 ; 150, 144, 146) présentant des éléments de contact qui sont disposés sur un sous-ensemble commun, l'écart (B) entre les éléments de contact de la deuxième paire de contacts (44, 46 ; 144, 146) définissant une section de mesure ;
**caractérisée en ce que**
a) la vitesse d'un véhicule automobile est déterminée sous la forme d'une vitesse relative par rapport à un objet de collision (14) par le commutateur à déclenchement (30 ; 130),
b) un contrôle est effectué pour vérifier si la vitesse déterminée se trouve dans une plage prédéfinie,
c) un déclenchement du dispositif de protection des personnes n'a lieu que si la vitesse se trouve dans la plage prédéfinie et
d) un verrouillage du capot moteur (22) a lieu lorsque la vitesse est supérieure à la plage prédéfinie.

2. Utilisation selon la revendication 1,
**caractérisée en ce que** la vitesse relative est déterminée indirectement en évaluant l'impact de l'objet de collision au moyen du commutateur à déclenchement (30 ; 130).

3. Utilisation selon la revendication 1 ou 2, **caractérisée en ce que** la première et la deuxième paire de contacts (40, 44, 46 ; 150, 144, 146) du commutateur à déclenchement (30 ; 130) présentent un élément de contact commun (44 ; 144).

4. Utilisation selon l'une des revendications 1 à 3, **caractérisée en ce que** les éléments de contact (40 ; 150) de la première paire de contacts (40, 44 ; 150, 144) sont réalisés sous la forme de la paroi de boîtier (150) du commutateur à déclenchement.

5. Utilisation selon la revendication 4,
**caractérisée en ce que** le sous-ensemble commun est réalisé sous la forme d'un tube d'âme (152) à l'intérieur de la paroi de boîtier (150).

6. Utilisation selon la revendication 5,
**caractérisée en ce qu'**un actionnement de la première paire de contacts (150, 144) s'effectue en comprimant la paroi de boîtier (150) en direction du tube d'âme (152).

7. Utilisation selon la revendication 5 ou 6, **caractérisée en ce que** les rigidités de la paroi de boîtier (150) et du tube d'âme (152) sont accordées l'une sur l'autre de telle sorte qu'un début de l'actionnement de la deuxième paire de contacts (144, 146) n'a lieu qu'une fois que la première paire de contacts (150, 144) est fermée.

8. Utilisation selon l'une des revendications 1 à 7, **caractérisée en ce que** le commutateur à déclenchement (30 ; 130) est configuré sous la forme d'un pare-chocs (28).

9. Utilisation selon l'une des revendications 1 à 8, **caractérisée en ce qu'**un système de protection des piétons et/ou un système de protection des passagers sont activés par le commutateur à déclenchement (30 ; 130).

10. Utilisation selon la revendication 9,
**caractérisée en ce que** le système de protection des passagers (18) présente un dispositif à coussin gonflable de sécurité (20) et/ou un tendeur de ceinture (26).

11. Utilisation selon l'une des revendications 9 ou 10, **caractérisée en ce que** le capot moteur (22) est muni d'un mécanisme de levage (24, 25) qui peut uniquement être actionné à l'intérieur d'un créneau de vitesse et qui présente un système de verrouillage (48) qui, au-dessus d'une vitesse de verrouillage prédéfinie, verrouille le capot moteur (22) dans sa position fermée.
